# EUROPÄISCHE PATENTSCHRIFT

(11) **EP 1 628 821 B1**
(45) Veröffentlichungstag und Bekanntmachung des Hinweises auf die Patenterteilung: **18.08.2010**
(21) Anmeldenummer: 04739566.0
(22) Anmeldetag: 03.06.2004
(51) Int. Cl.: B29C 45/28, B29C 45/02, B29C 45/16, B29C 45/57, B29C 45/56

(54) **VERFAHREN UND VORRICHTUNG ZUM SPRITZEN EINES SPRITZGIESSTEILS AUS KUNSTSTOFF**
METHOD AND DEVICE FOR INJECTING AN INJECTION MOLDED PART MADE OF PLASTIC
PROCEDE ET DISPOSITIF D'INJECTION D'UNE PIECE EN PLASTIQUE MOULEE PAR INJECTION

(30) Priorität: 03.06.2003 DE 10325260
(43) Veröffentlichungstag der Anmeldung: 01.03.2006
(73) Patentinhaber: Gauss, Ralph, 3522 Dudelange (LU)
(72) Erfinder: Gauss, Ralph, 3522 Dudelange (LU)
(74) Vertreter: Weiss, Peter
(86) Internationale Anmeldenummer: PCT/EP2004/006000
(87) Internationale Veröffentlichungsnummer: WO 2004/106029

(56) Entgegenhaltungen:
- EP-A- 1 426 160
- WO-A-2004/026556
- DE-A- 19 857 735
- US-A- 6 045 740
- US-B1- 6 382 946
- PATENT ABSTRACTS OF JAPAN Bd. 1995, Nr. 05, 30. Juni 1995 (1995-06-30) & JP 07 040400 A (MITSUBISHI MATERIALS CORP), 10. Februar 1995 (1995-02-10)
- PATENT ABSTRACTS OF JAPAN Bd. 1996, Nr. 02, 29. Februar 1996 (1996-02-29) & JP 07 266379 A (MEIKI CO LTD), 17. Oktober 1995 (1995-10-17)
- PATENT ABSTRACTS OF JAPAN Bd. 0172, Nr. 06 (M-1400), 22. April 1993 (1993-04-22) & JP 04 348923 A (MITSUBISHI MATERIALS CORP), 3. Dezember 1992 (1992-12-03)

## Beschreibung

Die Erfindung betrifft ein Verfahren zum Spritzen eines Spritzgiessteils aus Kunststoff gemäss den Merkmalen von Patentanspruch 1, sowie eine Vorrichtung hierfür.

### STAND DER TECHNIK

Spritzgiessen von Kunststoff erfolgt üblicherweise so, dass der Kunststoff in beispielsweise einem Extruder zum Schmelzen gebracht wird und durch einen Schmelzekanal (Heisskanal) einer Düsenspitze zugeführt wird, durch die der Kunststoff in eine Kavität eingespritzt wird. Dort erkaltet der Kunststoff und kann dann der Kavität entnommen werden.

Bekannt ist es, den Übergang zwischen Schmelzekanal und Kavität durch einen Körper (Nadel) zu verschliessen, um beispielsweise ein Nachtropfen des Kunststoffes zu vermeiden.

Es ist bekannt, dass beispielsweise beim Spritzgiessen von sehr kleinen Teilen von unter 1 gr relativ grosse Kunststoffvolumina zur Schädigung des Kunststoffmaterials durch Degradation aufgrund zu langer Verweilzeit innerhalb der heissen Einspritzeinheit führen kann.

Demzufolge ist es hier optimal, bei solchen Anwendungen das Kunststoffvolumen in der Einspritzeinheit so zu verringern, indem der Weg zwischen Spritzgiessmaschine und Formnest möglichst verkürzt oder ganz eliminiert wird. Dies würde erreicht werden, wenn quasi die Maschine in einen Heisskanal integriert oder andere Funktionen der Maschine, z.B. das Dosieren, von der Einspritzeinheit übernommen werden.

Beim Spritzgiessen von sehr dickwandigen Bauteilen, wie z.B. optischen Bauteilen, werden sehr lange Haltezeiten benötigt, um Formteilschwindung auszugleichen. Düsenspitzen können zur Orientierung des Materials führen und optische Eigenschaften beinträchtigen.

Aus der US 6,045,740 geht ein Verfahren und eine Vorrichtung zum Spritzen eines Spritzgiessteils aus Kunststoff hervor, welches einen Spritzzylinder, einen Spritzkolben und temperierbare Vorkammern aufweist. Die Kunststoffschmelze wird über temperierbare Schmelzkanäle den Vorkammern zugeführt und mittels der Einspritzkolben über die Einspritzdüsen den Formhohlräumen zugeführt.

Dieses Dokument offenbart ein Verfahren zum Spritzen eines Spritzgiessteils aus Kunststoff mittels einer Einspritzeinheit, welche einen Anschnitt in einem Düsengehäuse aufweist, wobei der Anschnitt mit einem Schmelzekanal in Verbindung steht, der in einen Füllraum einmündet, in dem eine äussere Nadel und in dieser eine innere Nadel zum Verschließen des Anschnitts geführt sind, wobei zuerst die äußere Nadel unter Ausbildung des Füllraumes zurückgezogen, dabei Kunststoff aus dem Schmelzekanal in dem Füllraum vordosiert wird, währenddessen die innere Nadel den Anschnitt verschlossen hält, wobei am Ende oder nach dem Vordosieren der Anschnitt durch Anheben der inneren Nadel geöffnet und das vordosierte Kunststoffmaterial durch eine Hubbewegung der äußeren Nadel durch den Anschnitt in eine Kavität gedrückt wird, wobei die innere Nadel am Ende der Hubbewegung der äußeren Nadel oder am Ende eine vorbestimmten Haltezeit den Anschnitt verschließt. US 6,045,740 offenbart weiter eine Vorrichtung gemäß dem Oberbegriff des Anspruchs 9.

### AUFGABE

Aufgabe der vorliegenden Erfindung ist es, ein Verfahren und eine Vorrichtung der o.g. Art zu entwickeln, mit der das Herstellen von Spritzgiessteilen beschleunigt und vereinfacht wird.

### LÖSUNG DER AUFGABE

Zur Lösung der Aufgabe führen die Merkmale von Patentanspruch 1. Die Aufgabe wird ebenfalls durch eine Vorrichtung nach Anspruch 9 gelößt.

Diese Erfindung sorgt dafür, dass beispielsweise ein sehr kleines Bauteil durch Aufdosieren von genau der Materialmenge, die für das Bauteil benötigt wird, hergestellt werden kann. Dies wird dadurch erreicht, dass die innere Verschlussnadel den Anschnitt während dem Aufdosieren des Kunststoffes verschlossen hält und somit ein Austreten des flüssigen Kunststoffes verhindert.

Am Ende des Vordosierens der benötigten Kunststoffmenge wird die innere Verschlussnadel geöffnet und das vordosierte Kunststoffmaterial durch eine Hubbewegung der äusseren Nadel in das Formnest (Kavität) gefördert. Danach kann durch eine weitere Hubbewegung mit der äusseren Nadel weiter Material in das Formnest eingebracht werden, um etwaige Schwindung auszugleichen. Am Ende der Hubbewegung der äusseren Nadel oder am Ende der Haltezeit, verschliesst die innere Nadel den Anschnitt und die Kühlzeit setzt ein.

Die innere Nadel ist in der äusseren Nadel geführt, wobei die äussere Nadel wiederum in dem Düsengehäuse eine Hubbewegung durchführt. Durch das Führen der inneren Nadel in der äusseren Nadel wird eine hohe Präzision erreicht. Diese Führung der Nadel ermöglicht es, den Verschleiss an dieser inneren Nadel zu minimieren. Die innere Nadel ist so zwangsgeführt, dass die definiert den Anschnitt genau verschliessen kann. Die Vorzentrierung ermöglicht weiterhin einen maximalen Wärmeaustausch zwischen heisser und kalter Seite, die somit eine hohe Anschnittgüte durch optimale Abkühlung ermöglicht. Ferner wird eine hohe optische Güte der Anschnittqualität erreicht.

Dadurch, dass die innere Nadel in der äusseren Nadel geführt ist, kann die innere Nadel um ein Vielfaches reduziert werden, was vor allem ihren Durchmesser anbelangt, ohne dass die Gefahr von Knickungen besteht. Damit ist es möglich, mit der entsprechenden Nadel auch kleinste Anschnitte zu verschliessen. Dies ist wiederum bei der Herstellung von Mikrobauteilen wichtig.

Wie die Bewegung der Nadeln gesteuert wird, ist von untergeordneter Bedeutung. Die Bewegung kann mechanisch, hydraulisch oder elektrisch erfolgen.

Je nach Wunsch, kann ein Wechselspiel von Öffnen und Schliessen bei beiden Nadeln erfolgen. Hierdurch wird der Kunststoff vordosiert, eingespritzt bzw. ein Haltedruck aufgebracht. Durch diese Steuerung ist ein flexibles Anpassen an verschiedene Anwendungsfälle oder Kunststoffarten möglich. Das bedeutet auch, dass beispielsweise kleine Düsen direkt angesteuert werden können und der oben beschriebene Zyklus zeitlich variabel auf verschiedene Kunststoffteile angepasst werden kann.

In der Regel dürfte es ratsam sein, im Schmelzekanal ein Absperrorgan anzubringen, damit nicht beim Einspritzen von Kunststoff oder beim Aufbringen eines Haltedrucks ein Zurückdrücken der Schmelze im Schmelzekanal erfolgt. Wie dieses Absperrorgan ausgebildet ist, ist von untergeordneter Bedeutung. Auch hier kann sich ein Nadel- oder ein Drehverschluss od. dgl. anbieten.

Am Ende des Einspritzvorganges oder des Haltedruckes soll das Kunststoffvolumen innerhalb der Einspritzeinheit bzw. innerhalb des Füllraumes nahezu Null betragen. Das bedeutet, dass am Ende des Einspritzvorganges die äussere Nadel so nahe am Boden des Füllraumes, am Ende der Kavität oder am Ende des Kavitäteneinsatzes des Werkzeuges liegt, dass tote Zonen oder Materialreste durch Formschlüssigkeit weitestgehend vermindert werden. Da keine Vorkammer mehr vorgesehen ist, wie bei Düsen nach dem Stand der Technik, wird der gesamte Raum für die Schmelze in der Einspritzeinheit reduziert.

Damit hat jetzt in einem Einzel- oder Multikavitätenwerkzeug die "Heisskanaldüse" die Funktion der Einspritzeinheit der Maschine direkt übernommen, wodurch vor allem eine Verweilzeit des Kunststoffes gesteuert reduziert wird. Da zudem die Degradation reduziert ist, können sehr viele Teile in kurzer Zeiteinheit bei Minimierung des Ausschusses hergestellt werden.

In einem Mehrkavitätenwerkzeug kann z.B. die erfindungsgemässe Spritzeinheit direkt als druckführende Spritzeinheit ausgeführt sein. Damit entfällt eine druckführende Spritzgiesseinheit der Maschine komplett, es wird nur noch eine Materialzuführung in Form einer Materialförderung benötigt. Wichtig ist hierbei, dass durch eine Verriegelung am Einlauf ein Gegendruck aufgebaut werden kann. So sind neue Maschinenkonzepte möglich, speziell im Hinblick darauf, dass bei Mikroteilen kaum noch Hubbewegungen einer Kunststoffmaschine im klassischen Sinne nötig sind.

Da die Spritzeinheit und die innere Nadel direkt am Anschnitt öffnen kann, werden Fliesslinien, die typischerweise durch Düsenspitzen entstehen, komplett eliminiert. Dies wird dadurch erreicht, dass die äussere Nadel die Funktion der Düsenspitze übernimmt. Dadurch entfällt eine "passive" Düsenspitze komplett. Die Spritzeinheit selbst wird zu einer Art Düsenspitze.

Düsenspitzen im klassischen Sinne ermöglichen die gezielte Trennung von heisser zu kalter Seite (HT/VG). Speziell bei Mikrobauteilen muss diese Funktion komplett neu überdacht werden, da die Angussreste bei weitem das Gewicht des Bauteils (selbst mit Heisskanal) übertreffen.

Bei der vorliegenden Erfindung ist auch daran gedacht, dass die erfindungsgemässe Spritzeinheit selbständig als Pumpensystem zum Einspritzen von Duroplasten oder Elastomeren neben der thermoplastischen Anwendung eingesetzt wird. Dabei werden die Spritzeinheiten frei an Anspritzpunkten bei "heissen" Werkzeugen für Elastomere oder Duroplasten angebracht. Die Zuführung von Schmelze erfolgt in die "Pumpe", die nach Abriegeln und Druckaufbau die Duroplaste oder Elastomere in das heisse Werkzeug befördern kann. Dabei können mehrere Düsen zu einer Mischeinheit zusammengeschlossen werden, d.h., eine beliebige Anzahl von Düsen fördern gesteuert in eine Mischdüse. Die Materialzuführung wird von einer Fördereinheit übernommen. Den Materialauslass, das Mischen und den Druckaufbau übernimmt das Düsensystem.

Schlussendlich kann die oben erwähnte Spritzeinheit auch zur Co-Injektion (Zweifarbendüse) verwendet werden. In diesem Fall mündet zumindest ein weiterer Schmelzekanal in den Füllraum, wobei auch dieser Schmelzekanal durch ein Absperrorgan als Rückstromsperre absperrbar ist.

In einem weiteren Ausführungsbeispiel der Erfindung ist daran gedacht, den ersten Schmelzekanal kurz unterhalb des Anschnittes einmünden zu lassen, so dass die innere Nadel diesen ersten Schmelzekanal verschliessen und öffnen kann. Der zweite Schmelzekanal mündet dann in den Füllraum, bevorzugt bei Beginn der Schräge, auf welche die äussere Nadel nach dem Ausdrücken der Schmelze aus dem Füllraum trifft. Hierdurch wird die Zugabe von Schmelze aus dem ersten oder zweiten Schmelzekanal exakter getrennt.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeit in
Figur 1 einen schematisch dargestellten Querschnitt durch eine efindungsgemässe Einspritzeinheit;
Figuren 2 bis 4 schematisch dargestellte Querschnitte durch die Einspritzeinheit gemäss Figur 1 in weiteren Gebrauchslagen;
Figur 5 einen schematisch dargestellten Querschnitt durch ein weiteres Ausführungsbeispiel einer Einspritzeinheit, die Kein Teil der Erfindung ist;
Figur 6 einen schematisch dargestellten Querschnitt durch ein weiteres Ausführungsbeispiel einer Einspritzeinheit.

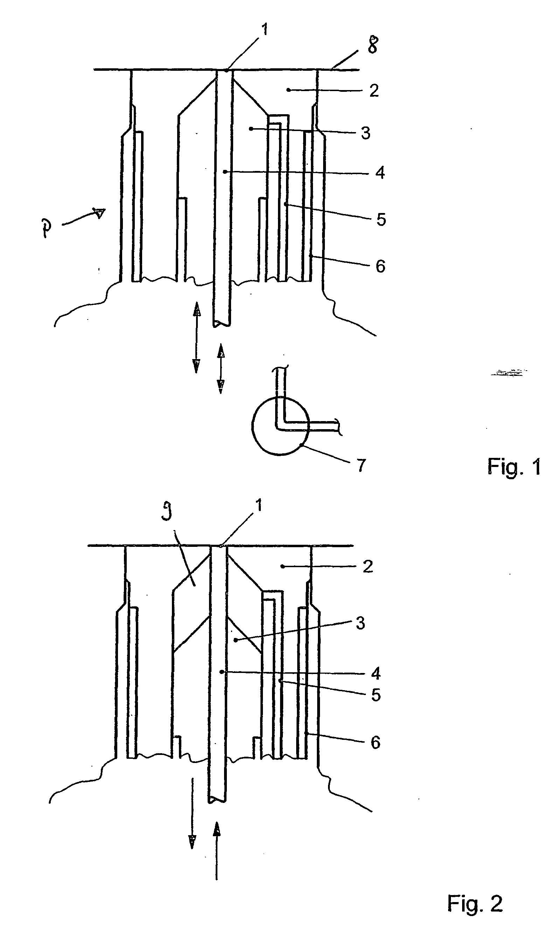

Eine in Figur 1 dargestellte Einspritzeinheit hat einen Anschnitt 1, ein Düsengehäuse 2, eine äussere Nadel 3, eine innere Nadel 4, einen Schmelzekanal 5, eine Heizung 6 und ein Absperrventil 7.

Die innere Nadel 4 läuft dabei zylindrisch oder mit einem Winkel am Ende der Nadel in den Anschnitt 1. Die äussere Nadel 3 läuft dabei um die innere Nadel 4 und innerhalb des Gehäuses 2. Die äussere Nadel 3 gibt den lateral liegenden Zufluss (aus dem Düsengehäuse) frei. Das Düsengehäuse 2 ist an dieser Stelle verstopft oder mehrteilig.

Alternativ ist es auch möglich, dass das Material auch aus der inneren oder äusseren Nadel 3, 4 zugeführt wird. In diesem Fall sind die Nadeln als Hohlnadeln ausgebildet. Ferner wäre es auch möglich, eine weitere Nadel zur Ansteuerung der Schmelze zu Hilfe zu nehmen. Die Nadel könnte dann um das Äussere oder innerhalb des Gehäuses verlaufen.

Die Bewegungen werden durch eine Steuereinheit (Computer) oder durch den Schmelzefluss selbst kontrolliert und gesteuert. Die Steuerung ist ggf. an Zeit-, Druck- und/oder Wegaufnehmer angeschlossen.

Das Absperrventil 7 als solches kann auf verschiedene Art festgelegt sein (durch Nadel oder Drehventil), wichtig ist nur, dass bei einer Absperrung eine dem Einspritzdruck entgegengesetzte Wirkung (Druck) erreicht wird. Das Absperrventil 7 kann sich innerhalb oder ausserhalb der Einspritzdüse befinden.

Die Hubbewegungen der beiden Nadeln werden aufgrund der hohen Präzision der Bewegungen beim Mikrospritzguss durch den Antrieb mit elektrischen Motoren ermöglicht (z.B. sequentiell aufgebaute Schrittmotoren). Jedoch ist für grössere Bauteile auch ein pneumatischer oder hydraulische Antrieb möglich.

Die Funktionsweise der vorliegenden Erfindung wird anhand der Figuren 2 bis 4 näher beschrieben.

Die Spritzeinheit P liegt auf einer Trennlinie 8 einer kalten Seite der Form an, wobei auf den Anschnitt 1 auf der kalten Seite eine Kavität folgt. Die Spritzeinheit P bildet dagegen einen Teil der heissen Werkzeugseite.

Gemäss Figur 1 ist der Anschnitt 1, d.h., die Öffnung zur Kavität, durch die innere Nadel 4 verschlossen. Sowohl auf die innere Nadel 4 als auch auf die äussere Nadel 3 wird ein entsprechender Schliessdruck aufgebracht. Das Absperrventil 7 befindet sich in Öffnungslage.

Gemäss Figur 2 wird nun die äussere Nadel 3 zurückgezogen, so dass sich ein Füllraum 9 um die innere Nadel 4 herum ausbildet. In diesen Füllraum 9 mündet der Schmelzkanal 5 ein, so dass Schmelze in den Füllraum 9 bei geöffnetem Ventil 7 eintreten kann. Durch das Zurückziehen der äusseren Nadel 3 kann sogar ein entstehender Unterdruck in dem Füllraum 9 ein Ansaugen der Schmelze bewirken, so dass der Füllvorgang beschleunigt wird. Durch die Wahl der Grösse des Füllraumes 9 findet ein Vordosieren statt.

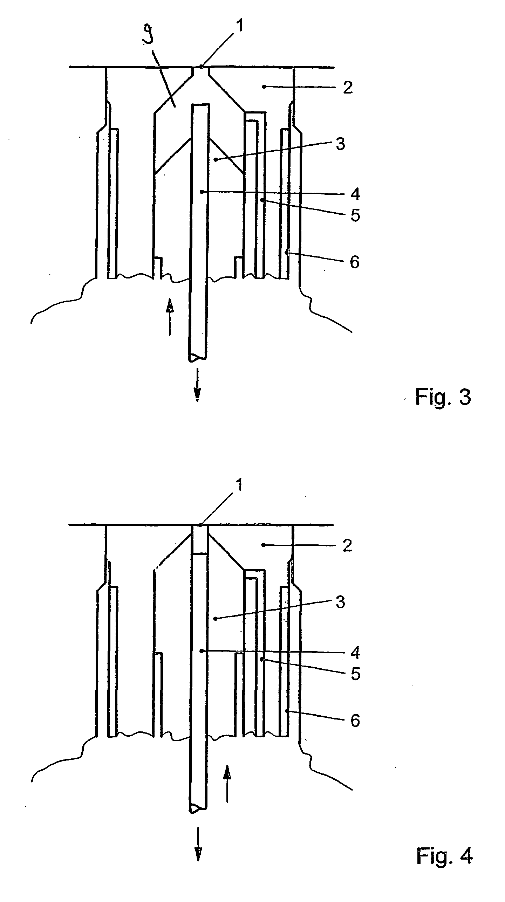

Gemäss Figur 3 wird die innere Nadel 4 zurückgezogen, so dass sich der Anschnitt 1 öffnet. Das Ventil 7 wird geschlossen und Druck auf die äussere Nadel 3 ausgeübt. Hierdurch erfolgt ein Ausbringen von Schmelze aus dem Füllraum 9 durch den Anschnitt 1 in eine Kavität auf der "kalten" Seite.

Der Vorgang gemäss Figur 2 und Figur 3 kann mehrfach wiederholt werden, so dass auf diese Art und Weise Schmelze in die Kavität "gepumpt" wird.

Ist die Kavität ausreichend gefüllt, wird durch die äussere Nadel 3 nach wie vor Druck ausgeübt, was dadurch geschehen kann, dass der Füllraum durch die äussere Nadel 3 noch nicht gänzlich ausgepresst ist. Bei diesem Haltedruck kann der Kunststoff in der Kavität härten bzw. es wird noch Kunststoff bei Schwindung in der Kavität nachgestossen.

Der letzte Schritt ist jetzt ein Schliessen des Anschnitts 1 durch die innere Nadel 4, wie dies in Figur 1 gezeigt ist.

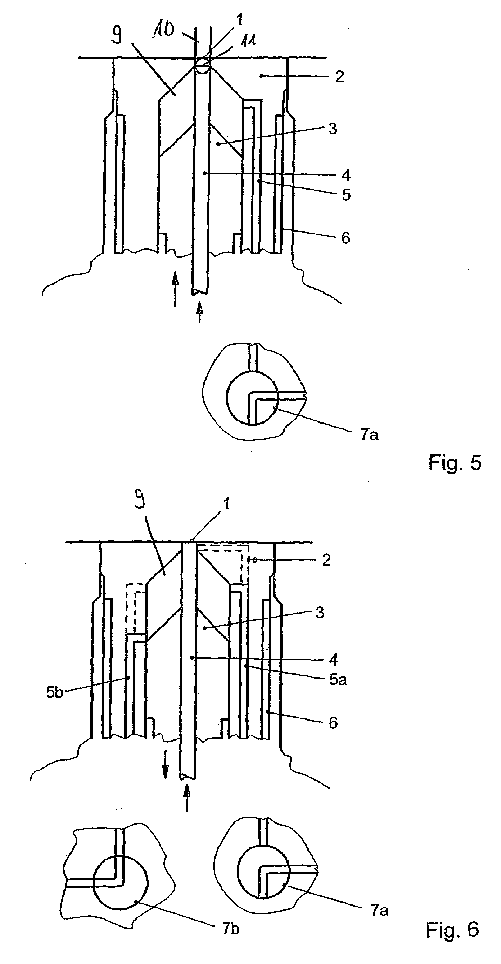

Bei dem Ausführungsbeispiel einer Spritzeinheit gemäss Figur 6 mündet in den Füllraum 9 zwei Schmelzekanäle 5a und 5b ein. Beide Schmelzekanäle sind jeweils mit einem Ventil 7a und 7b belegt. Diese Spritzeinheit bietet sich vor allem zur Co-Injection an. Dabei können die beiden Ventile 7a und 7b unterschiedlich gesteuert werden.

Bei diesem in Figur 6 gezeigten Ausführungsbeispiel ist es auch möglich, den Schmelzekanal 5a, wie gestrichelt angedeutet, kurz unterhalb des Anschnitts 1 ausmünden zu lassen. In diesem Fall dient die innere Nadel 4 dem Öffnen und Verschliessen dieses Schmelzekanals, d.h., die innere Nadel 4 kann geöffnet und über den Schmelzekanal 5a Schmelze direkt durch den Anschnitt in eine Kavität eingegeben werden. Die innere Nadel 4 dient dann bevorzugt auch zum Absperren des Füllraumes 9, solange nicht erwünscht wird, dass Schmelze aus diesem Füllraum 9 ebenfalls in die Kavität gelangt. Erst wenn dies gewünscht wird, wird die innere Nadel 4 weiter zurückgezogen, so dass der Durchgang zur Kavität freigegeben wird.

Der zweite Schmelzekanal 5b mündet in diesem Ausführungsbeispiel bevorzugt nahe dem Boden des Füllraumes 9, der hier als Schräge ausgebildet ist, in diesen ein.

## Patentansprüche

1. Verfahren zum Spritzen eines Spritzgiessteils aus Kunststoff mittels einer Einspritzeinheit, welche einen Anschnitt (1) in einem Düsengehäuse (2) aufweist, wobei der Anschnitt (1) mit einem Schmelzekanal (5) in Verbindung steht, der in einen Füllraum (9) einmündet; in dem eine äussere Nadel (3) und in dieser eine innere Nadel (4) zum Verschliessen des Anschnitts (1) geführt sind, wobei zuerst die äussere Nadel (3) unter Ausbildung eines Füllraumes (9) zurückgezogen, dabei Kunststoff aus dem Schmelzekanal (5) angesaugt und der Füllraum (9) mit Kunststoff aus dem Schmelzekanal (5) vordosiert wird, währenddessen die innere Nadel (4) den Anschnitt (1) verschlossen hält, wobei am Ende oder nach dem Vordosieren der Anschnitt (1) durch Anheben der inneren Nadel (4) geöffnet und das vordosierte Kunststoffmaterial durch eine Hubbewegung der äusseren Nadel (3) durch den Anschnitt (1) in eine Kavität gedrückt wird, wobei am Ende des Einspritzvorganges oder des Haltedrucks das Kunststoffvolumen innerhalb des Füllraumes (9) nahezu Null beträgt und die innere Nadel (4) am Ende der Hubbewegung der äusseren Nadel (3) oder am Ende einer vorbestimmten Haltezeit den Anschnitt (1) verschliesst.

2. Verfahren nach Anspruch 1, **dadurch gekennzeichnet, dass** der Boden des Füllraumes (9) schräg zum Anschnitt (1) hin verläuft und die Spitze der äusseren Nadel (3) entsprechend ausgebildet ist.

3. Verfahren nach Anspruch 1 oder 2, **dadurch gekennzeichnet, dass** der Schmelzekanal (5) nahe dem Boden des Füllraumes (9) in diesen einmündet.

4. Verfahren nach einem der Ansprüche 1 bis 3, **dadurch gekennzeichnet, dass** die Hubbewegung von innerer und/oder äusserer Nadel (4, 3) mechanisch, hydraulisch oder elektrisch erfolgt.

5. Verfahren nach wenigstens einem der Ansprüche 1 bis 5, **dadurch gekennzeichnet, dass** durch zumindest eine weitere Hubbewegung der äusseren Nadel (3), auch zum Ausgleich von etwaigen Schwindungen, weiteres Kunststoffmaterial in die Kavität eingebracht wird.

6. Verfahren nach wenigstens einem der Ansprüche 1 bis 5, **dadurch gekennzeichnet, dass** weiteres Kunststoffmaterial über zumindest einen zweiten sperrbaren Schmelzekanal (5b) in den Füllraum (9) eingebracht wird.

7. Verfahren nach Anspruch 6, **dadurch gekennzeichnet, dass** die innere Nadel (4) zurückgezogen und ein Schmelzekanal (5a) geöffnet und über diesen Schmelze direkt durch den Anschnitt (1) in die Kavität eingegeben wird, während die innere Nadel (4) noch den Füllraum (9) absperrt.

8. Verfahren nach Anspruch 7, **dadurch gekennzeichnet, dass** die innere Nadel (4) weiter zurückgezogen und der Durchgang von Füllraum (9) zur Kavität freigegeben wird.

9. Vorrichtung zum Spritzen eines Spritzgeissteils aus Kunststoff mit einem Anschnitt (1) in einem Düsengehäuse (2), wobei der Anschnitt (1) mit einem Schmelzekanal (5) in Verbindung steht und in dem Düsengehäuse (2) in dem Anschnitt (1) eine innere Nadel (4) und zum Dosieren, Eindrücken und ggf. Druckhalten der Schmelze eine äussere Nadel (3) vorgesehen sind und wobei der Schmelzekanal (5) in einen Füllraum (9) ein mündet, indem auch die äussere Nadel (3) geführt ist, **dadurch gekennzeichnet, dass** Steurungsmittel zur Durchführung des Verfahrens nach wenigstens einem der Ansprüche 1 bis 8 vorgesehen sind.

10. Vorrichtung nach Anspruch 9, **dadurch gekennzeichnet, dass** der Boden des Füllraumes (9) schräg zum Ausschnitt (1) hin verläuft und die Spitze der äusseren Nadel (3) entsprechend ausgebildet ist.

11. Vorrichtung nach Anspruch 9 oder 10, **dadurch gekennzeichnet, dass** im Schmelzekanal (5) ein Absperrorgan (7a, 7b) angeordnet ist.

12. Vorrichtung nach einem der Ansprüche 9 bis 11, **dadurch gekennzeichnet, dass** in den Füllraum (9) zumindest ein weiterer Schmelzekanal (5b) einmündet, der ebenfalls mit einem Absperrorgan (7b) belegt ist.

13. Vorrichtung nach Anspruch 12, **dadurch gekennzeichnet, dass** der Schmelzekanal (5a) kurz unterhalb des Anschnitts (1) ausmündet, während der witerer Schmelzekanal (5b) nahe dem Boden des Füllraumes (9) in diesen einmündet.

14. Vorrichtung nach wenigstens einem der Ansprüche 9 bis 13, **dadurch gekennzeichnet, dass** das Düsengehäuse (2) mit den beiden Nadeln (3, 4) und dem/n Schmelzekanal/en (5, 5a, 5b) eine Einspritzeinheit ausbildet, die einer Kavität zuordenbar ist.

## Claims

1. Method for injecting an injection-moulded part made of plastic, using an injection unit having a gate (1) in a nozzle housing (2), the gate (1) being connected to a melt channel (5) which opens into a filling space (9) in which an outer needle (3), and within same an inner needle (4) for closing the gate (1), are guided, the outer needle (3) first being pulled back, thereby forming a filling space (9), and plastic being drawn in from the melt channel (5) and the filling space (9) being predosed with plastic from the melt channel (5), during which the inner needle (4) keeps the gate (1) closed, and at the end or after predosing, the gate (1) being opened by lifting the inner needle (4), and the predosed plastic material being pressed through the gate (1) into a cavity by a lifting motion of the outer needle (3), the volume of plastic inside the filling space (9) being almost zero at the end of the injection process or of the holding pressure, and the inner needle (4) closing the gate at the end of the lifting motion of the outer needle (3) or at the end of a predetermined holding time.

2. Method according to Claim 1, **characterised in that** the bottom of the filling space (9) runs at an angle towards the gate (1), and the tip of the outer needle (3) has a corresponding design.

3. Method according to Claim 1 or 2, **characterised in that** the melt channel (5) opens into the filling space (9), near the bottom thereof.

4. Method according to one of Claims 1 to 3, **characterised in that** the lifting motion of the inner and/or outer needle (4, 3) is produced by mechanical, hydraulic, or electrical means.

5. Method according to at least one of Claims 1 to 5, **characterised in that** additional plastic material is introduced into the cavity, also to compensate for any shrinkage, by at least one further lifting motion of the outer needle (3).

6. Method according to at least one of Claims 1 to 5, **characterised in that** additional plastic material is introduced into the filling space (9) through at least one second, blockable melt channel (5b).

7. Method according to Claim 6, **characterised in that** the inner needle (4) is pulled back and a melt channel (5a) is opened, via which melt is introduced directly into the cavity through the gate (1), while the inner needle (4) continues to block the filling space (9).

8. Method according to Claim 7, **characterised in that** the inner needle (4) is pulled back further, and the passage from the filling space (9) to the cavity is opened.

9. Device for injecting an injection-moulded part made of plastic, having a gate (1) in a nozzle housing (2), the gate (1) being connected to a melt channel (5), and in the nozzle housing (2) in the gate (1) an inner needle (4) being provided and for dosing, pressing-in and where appropriate maintaining the pressure of the melt an outer needle (3) being provided, the melt channel (5) opening into a filling space (9) in which the outer needle (3) is also guided, **characterised in that** control means are provided for carrying out the method according to at least one of Claims 1 to 8.

10. Device according to Claim 9, **characterised in that** the bottom of the filling space (9) runs at an angle towards the gate (1), and the tip of the outer needle (3) has a corresponding design.

11. Device according to Claim 9 or 10, **characterised in that** a blocking element (7a, 7b) is arranged in the melt channel (5).

12. Device according to one of Claims 9 to 11, **characterised in that** at least one additional melt channel (5b) opens into the filling space (9) and is likewise provided with a blocking element (7b).

13. Device according to Claim 12, **characterised in that** the melt channel (5a) discharges a short distance below the gate (1), while the additional melt channel (5b) opens into the filling space (9), near the bottom thereof.

14. Device according to at least one of Claims 9 to 13, **characterised in that** the nozzle housing (2) forms an injection unit with the two needles (3, 4) and the melt channel(s) (5, 5a, 5b), and the injection unit can be associated with a cavity.

## Revendications

1. Procédé d'injection d'une pièce en plastique moulée par injection à l'aide d'une unité d'injection qui présente une attaque (1) dans un boîtier à tuyère (2), l'attaque (1) communiquant avec un canal à masse en fusion (5) qui aboutit dans un espace de remplissage (9) dans lequel est guidée une aiguille extérieure (3), et dans cette dernière une aiguille intérieure (4), pour obturer l'attaque (1), l'aiguille extérieure (3) étant tout d'abord retirée en formant un espace de remplissage (9), de la matière plastique étant aspirée du canal à masse en fusion (5) et l'espace de remplissage (9) étant prédosé en matière plastique du canal à masse en fusion (5), tandis qu'entretemps l'aiguille intérieure (4) maintient l'attaque (1) fermée, l'attaque (1) étant, à la fin ou après le prédosage, ouverte en levant l'aiguille intérieure (4) et la matière plastique prédosée étant poussée, par un mouvement de levage de l'aiguille extérieure (3), à travers l'attaque (1), dans une cavité, le volume de matière plastique dans l'espace de remplissage (9) étant, à la fin de l'opération d'injection ou de la pression de maintien, pratiquement nul et l'aiguille intérieure (4) obturant, à la fin du mouvement de levage de l'aiguille extérieure (3) ou à la fin d'un temps de maintien, l'attaque (1).

2. Procédé selon la revendication 1, **caractérisé par le fait que** le fond de l'espace de remplissage (9) s'étend obliquement vers l'attaque (1) et la pointe de l'aiguille extérieure (3) est réalisée en conséquence.

3. Procédé selon la revendication 1 ou 2, **caractérisé par le fait que** le canal à masse en fusion (5) aboutit près du fond de l'espace de remplissage (9), dans ce dernier.

4. Procédé selon l'une des revendications 1 à 3, **caractérisé par le fait que** le mouvement de levage de l'aiguille intérieure et/ou extérieure (4, 3) a lieu de manière mécanique, hydraulique ou électrique.

5. Procédé selon au moins l'une des revendications 1 à 5, **caractérisé par le fait que** par au moins un autre mouvement de levage de l'aiguille extérieure (3), également pour compenser des retraits, est introduite de la matière plastique additionnelle dans la cavité.

6. Procédé selon au moins l'une des revendications 1 à 5, **caractérisé par le fait que** de la matière plastique additionnelle est introduite par l'intermédiaire d'au moins un deuxième canal à masse en fusion obturable (5b) dans l'espace de remplissage (9).

7. Procédé selon la revendication 6, **caractérisé par le fait que** l'aiguille intérieure (4) est retirée et qu'un canal à masse en fusion (5a) est ouvert et que par celui-ci de la masse en fusion est introduite directement à travers l'attaque (1) dans la cavité, tandis que l'aguille intérieure (4) obture encore l'espace de remplissage (9).

8. Procédé selon la revendication 7, **caractérisé par le fait que** l'aguille intérieure (4) est davantage retirée et que le passage de l'espace de remplissage (9) vers la cavité est libéré.

9. Dispositif d'injection d'une pièce en plastique moulée par injection avec une attaque (1) dans un boîtier à tuyère (2), l'attaque (1) communiquant avec un canal à masse en fusion (5) et dans le boîtier à tuyère (2) dans l'attaque (1) étant prévues une aiguille intérieure (4) et, pour le dosage, l'introduction et éventuellement le maintien sous pression de la masse en fusion, une aiguille extérieure (3) et le canal à masse en fusion (5) aboutissant dans un espace de remplissage (9) dans lequel est également guidée l'aiguille extérieure (3), **caractérisé par le fait qu'**il est prévu des moyens de commande pour la mise en oeuvre du procédé selon au moins l'une des revendications 1 à 8.

10. Dispositif selon la revendication 9, **caractérisé par le fait que** le fond de l'espace de remplissage (9) s'étend obliquement vers l'attaque (1) et la pointe de l'aiguille extérieure (3) est réalisée en conséquence.

11. Dispositif selon la revendication 9 ou 10, **caractérisé par le fait que** dans le canal à masse en fusion (5) est disposé un organe d'obturation (7a, 7b).

12. Dispositif selon l'une des revendications 9 à 11, **caractérisé par le fait que** dans l'espace de remplissage (9) aboutit au moins un autre canal à masse en fusion (5b) qui est également équipé d'un organe d'obturation (7b).

13. Dispositif selon la revendication 12, **caractérisé par le fait que** le canal à masse en fusion (5a) aboutit peu avant l'attaque (1), tandis que l'autre canal à masse en fusion (5b) aboutit près du fond de l'espace de remplissage (9) dans ce dernier.

14. Dispositif selon au moins l'une des revendications 9 à 13, **caractérisé par le fait que** le boîtier à tuyère (2) constitue, avec les deux aiguilles (3, 4) et le ou les canaux à masse en fusion (5, 5a, 5b), une unité d'injection qui peut être associée à une cavité.
